# EUROPÄISCHE PATENTSCHRIFT

(11) **EP 3 395 036 B1**
(45) Veröffentlichungstag und Bekanntmachung des Hinweises auf die Patenterteilung: **07.06.2023**
(21) Anmeldenummer: 16822110.9
(22) Anmeldetag: 20.12.2016
(51) Int. Cl.: H04L 69/08, H04L 69/18, G07D 11/28, H04L 12/40

(54) **VORRICHTUNG UND VERFAHREN ZUR VERBINDUNG EINER PRODUKTIONSVORRICHTUNG MIT EINEM NETZWERK**
DEVICE AND METHOD FOR CONNECTING A PRODUCTION DEVICE TO A NETWORK
DISPOSITIF ET PROCÉDÉ DE CONNEXION D'UN DISPOSITIF DE PRODUCTION À UN RÉSEAU

(30) Priorität: 22.12.2015 DE 102015016616
(43) Veröffentlichungstag der Anmeldung: 31.10.2018
(73) Patentinhaber: secunet Security Networks Aktiengesellschaft, 45138 Essen (DE)
(72) Erfinder: KULIKOWSKI, Jens, 85445 Oberding (DE)
(74) Vertreter: Kasseck, Christoph
(86) Internationale Anmeldenummer: PCT/EP2016/002141
(87) Internationale Veröffentlichungsnummer: WO 2017/108177

(56) Entgegenhaltungen:
- WO-A1-2011/151768
- DE-A1-102012 024 397
- US-A- 5 796 721
- US-A1- 2007 067 458

## Beschreibung

Die vorliegende Erfindung betrifft eine Vorrichtung zur Verbindung einer datenverarbeitenden und/oder datenerzeugenden Produktionsvorrichtung, insbesondere einer Vorrichtung zur Bearbeitung von Wertdokumenten, mit einem Netzwert, ein System mit einer solchen Verbindungsvorrichtung und einer damit verbundenen datenverarbeitenden und/ oder datenerzeugenden Produktionsvorrichtung sowie ein Verfahren zu Aktualisierung eines solchen Systems.

Unter Wertdokumenten werden dabei blattförmige Gegenstände verstanden, die beispielsweise einen monetären Wert oder eine Berechtigung repräsentieren und daher nicht beliebig durch Unbefugte herstellbar sein sollen. Sie weisen daher nicht einfach herzustellende, insbesondere zu kopierende Merkmale auf, deren Vorhandsein ein Indiz für die Echtheit, d.h. die Herstellung durch eine dazu befugten Stelle, ist. Wichtige Beispiele für solche Wertdokumente sind Chipkarten, Coupons, Gutscheine, Schecks und insbesondere Banknoten.

Wertdokumente werden im Lauf ihrer Herstellung und Verwendung vielen Prüfungen, beispielsweise in Bezug auf deren Herstell- bzw. Druckqualität, deren Zustand nach Verwendung und deren Echtheit unterzogen.

Bedingt durch die immense Anzahl von Wertdokumenten, insbesondere Banknoten, werden zur Bearbeitung solcher Wertdokumente, insbesondere zur Prüfung, Wertdokumentbearbeitungsvorrichtungen zur weitgehend automatischen Bearbeitung von Wertdokumenten verwendet. Unter Bearbeitung wird im Rahmen der vorliegenden Erfindung insbesondere das Annehmen, Ausgeben, Prüfen, Sortieren nach vorgegebenen Kriterien und die Vernichtung von Wertdokumenten sowie der Vorstufen von Wertdokumenten während deren Herstellung verstanden. Schnelle Wertdokumentbearbeitungsvorrichtungen bearbeiten Wertdokumente teilweise mit sehr hoher Geschwindigkeit von über 30 Wertdokumenten von Sekunde. Die Wertdokumente liegen oft in Stapeln vor und müssen vereinzelt werden, um dann zunächst zur Erfassung vorgegebener physischer Eigenschaften mittels Sensoren zu entsprechenden Sensoren transportiert zu werden. Nach der Erfassung der Eigenschaften während des Transports können die von den Sensoren erfassten Daten unter Bildung einer Sortierklasse verarbeitet werden. Diese wird von einem System zum Transport der Wertdokumente dazu verwendet, ein Wertdokument in ein der ermittelten Sortierklasse zugewiesenen Ausgabebereich, gegebenenfalls auch einer Vorrichtung zur Vernichtung von Banknoten zuzuführen. Die genannten Vorgänge müssen in Echtzeit durchgeführt werden, da einzelnes Wertdokument während dessen Bearbeitung nicht angehalten werden kann. Die Steuerung von Vereinzelung, Transport, Erfassung der Eigenschaften durch die Sensoren, Bildung der Sortierklassen und nachfolgenden Transport von Erfassung von physischen Wertdokumenteigenschaften zur Prüfung in der Regel notwendige Sensorik, die hohe Transportgeschwindigkeit und die Anforderungen an die Zuführung zu den Ausgabebereichen ist daher, auch aber nicht nur bedingt durch die Echtzeitanforderungen, sehr komplex; dementsprechend komplex ist die dazu verwendete Software. Aus dieser Sicht sollten Aktualisierungen der Software so selten wie möglich erfolgen, da diese immer einen Eingriff in ein sehr komplexes System darstellen. Mögliche Nutzungszeiten ohne Aktualisierung könnten dann beispielsweise über 10 Jahren liegen.

Die Ergebnisse der Bearbeitung von Wertdokumenten sollen häufig erfasst werden, wozu eine Verbindung der Wertdokumentbearbeitungsvorrichtung mit einem Netzwerk des Betreibers der Wertdokumentbearbeitungsvorrichtung wünschenswert wäre, um die Ergebnisse auf geeignete Datenverarbeitungseinrichtungen des Betreibers übertragen zu können. Diese Anforderung bringt jedoch wenigstens zwei Schwierigkeiten mit sich. Zum einen verändern sich die Datenübertragungsverfahren in Netzwerken, insbesondere in Bezug auf die Software, verglichen mit der zuvor genannten Nutzungsdauer schnell. Dies würde entsprechende Aktualisierung der Software nach sich ziehen. Zum anderen ermöglichen solche Verbindungen in ein Netzwerk Angriffe auf die Daten und/oder Software der Wertdokumentbearbeitungsvorrichtung, wenn die Software Sicherheitslücken aufweist. Solche Sicherheitslücken sind aber bei Verwendung kommerzieller Betriebssystem nie auszuschließen.

Die Einbindung von Wertdokumentbearbeitungsvorrichtung in ein Betreibernetzwerk ist daher nicht ohne weiteres möglich und würde Kompromisse bei der Einrichtung und Modernisierung des Netzwerks erfordern.

Der Erfindung liegt daher die Aufgabe zugrunde, Mittel vorzuschlagen, mittels derer eine Einbindung einer Produktionsvorrichtung, insbesondere Wertdokumentbearbeitungsvorrichtung, in ein Netzwerke erleichtert wird, ohne häufige Aktualisierungen der Wertdokumentbearbeitungsvorrichtung vornehmen zu müssen. Weiter soll ein entsprechendes Verfahren vorgeschlagen werden. Die Patentanmeldung US 2007/067458 A1 offenbart einen Proxy-Server zur Verwendung in einem industriellen Steuerungssytem, der eine Abbildungskomponente umfasst, die mit einer Schnittstellenkomponente verbunden ist, die wiederum eine Datenkonvertierung und eine Filterung durchführt. WO 2011/151768 A1 offenbart ein Kommunikationsnetz einer industriellen Anlage, das zum Schutz eines industriellen Automatisierungs- und Steuerungssystems ausgelegt ist.

Die Aufgabe wird gelöst durch ein System mit den Merkmalen des Anspruchs 1, und durch Verfahren mit den Merkmalen jeweils des Anspruchs 13 (zur Verbindung einer Produktionseinrichtung mit einer Netzwerkschnittstelle mit einem Netzwerk) und des Anspruchs 14 (zur Aktualisierung eines erfindungsgemäßen Systems).

Gegenstand der Erfindung ist, wie oben erwähnt, zunächst ein System mit den Merkmalen des Anspruchs 1 und insbesondere ein System mit einer datenverarbeitenden und/oder datenerzeugenden Produktionsvorrichtung, die eine Netzwerkschnittstelle aufweist, und einer mit dieser Netzwerkschnittstelle über eine Datenverbindung verbundenen Vorrichtung.

Bei der datenverarbeitenden und/oder datenerzeugenden Produktionsvorrichtung kann es sich vorzugsweise um eine Vorrichtung handeln, die keine reine Datenverarbeitungseinrichtung ist. Insbesondere kann es sich um Infrastrukturvorrichtungen, Fertigungsanlagen oder Teile von diesen handeln. Besonders bevorzugt kann die Produktionsvorrichtung eine Vorrichtung zur Bearbeitung von Wertdokumenten sein, beispielsweise zum Prüfung, Sortieren, Banderolieren und/oder Verpacken oder Vernichten von Wertdokumenten, wie beispielsweise Banknoten, sein.

Die Vorrichtung ist zur Verbindung einer datenverarbeitenden und/oder datenerzeugenden Produktionsvorrichtung mit einem Netzwerk ausgebildet. Im Folgenden wird sie daher der Einfachheit halber auch Verbindungsvorrichtung bezeichnet. Das Netzwerk kann beispielsweise ein Netzwerk eines Betreibers der Wertdokumentbearbeitungsvorrichtung, vorzugsweise ein LAN sein. Vorzugsweise ist die Vorrichtung so ausgebildet, dass eine Datenverbindung zwischen einer vorgegebenen Wertdokumentbearbeitungsvorrichtung oder einer Wertdokumentbearbeitungsvorrichtung eines vorgegebenen Typs und einem vorgegebenen Netzwerk oder einem Netzwerk eines vorgegebenen Typs verwendbar ist.

Die Vorrichtung umfasst einen Speicher, vorzugsweise einen nicht-flüchtigen Speicher, und wenigstens einen Prozessor, der Zugriff auf den Speicher hat und dazu mit diesem über eine wenigstens eine Signalverbindung verbunden ist. In diesem Speicher ist insbesondere Programmcode eines Computerprogramms gespeichert, die mittels des wenigstens einen Prozessors ausführbar sind. Zusätzlich kann ein flüchtiger Arbeitsspeicher vorgesehen sein, der von dem wenigstens einen Prozessor nutzbar und dazu mit diesem über weitere Signalverbindungen verbunden ist.

Das Computerprogramm bzw. der Programmcode kann von dem Prozessor ausführbare Instruktionen und Konfigurationsdaten, die bei dem Ausführen der Instruktionen verwendet werden umfassen.

Zur Verbindung mit der Wertdokumentbearbeitungsvorrichtung einerseits und der Verbindung mit dem Netzwerk anderseits jeweils zur Übertragung von Daten sind die erste und die zweite Netzwerkschnittstelle vorgesehen. Diese können jeweils als Hardwarekomponente einen Netzwerkadapter bzw. ein Netzwerkkarte und als Softwarekomponente entsprechende Betriebssoftware, d. h. Treiber, die durch Programmcodeteile bzw. Instruktionen des Computerprogramms in dem Speicher gebildet sein können bzw. werden und Komponenten des Betriebssystems darstellen können, umfassen. Die Netzwerkadapter bzw. -karten sind jeweils über Signalverbindungen mit dem wenigstens einen Prozessor verbunden, der auch die Softwarekomponente ausführt und damit die Netzwerkadapter bzw. -karten betreibt. Bei den Netzwerkschnittstellen kann es sich vorzugsweise um Ethernet-Schnittstellen handeln.

Die Vorrichtung kann weitere Komponenten aufweisen, wie sie für einfache Datenverarbeitungsvorrichtungen typisch sind.

Der Paketfilter ist vorzugsweise so ausgelegt, dass er zum einen von dem Netzwerk eingehende Datenpakete filtert bevor sie gegebenenfalls, d. h. in Abhängigkeit von dem Ergebnis des Filterns, an die zweite Netzwerkschnittstelle weitergeleitet werden; zum anderen ist er so ausgelegt, dass er in das Netzwerk zu übertragende Datenpakete filtert. Bei der Vorrichtung umfasst der Programmcode dazu Programmcode, bei dessen Ausführung der wenigstens eine Prozessor den Paketfilter auf die Datenpakete, vorzugsweise unmittelbar vor Versand über die erste Netzwerkschnittstelle bzw. unmittelbar nach Empfang durch die erste Netzwerkschnittstelle, anwendet. Unter "unmittelbar" wird dabei verstanden, dass der Paketfilter vor Versand über die jeweils andere Netzwerkschnittstelle angewendet wird.

Unter einem Paketfilter wird durch Instruktionen und Konfigurationsparameter gegebene Software bzw. Programmcode verstanden, die bei Ausführung durch den Prozessor die Header von zu ankommenden, zu filternden Paketen prüft und über das weitere Schicksal des vollständigen Pakets entscheidet. Insbesondere können Pakete je nach Ergebnis der Prüfung der jeweiligen Header verworfen oder weitergeleitet werden. Der Paketfilter kann grundsätzlich beliebig gewählt sein, solange der die gewünschte Funktion erfüllt. Vorzugsweise ist bei der Vorrichtung der Paketfilter ein Paketfilter, der wenigstens auf der OSI-Schicht 2 arbeitet, d. h. zur Filterung von Paketen Informationen auf Schichten höher als 2 verwendet, besonders bevorzugt, IP- und/oder TCP-Header.

Die Vorrichtung ist so ausgebildet, dass bei einer Übertragung von Daten zwischen der ersten und der zweiten Netzwerkschnittstelle, d. h. von über die erste Netzwerkschnittstelle empfangene und die zweite Netzwerkschnittstelle gesendete oder von über die zweite Netzwerkschnittstelle empfangene und die erste Netzwerkschnittstelle gesendete Daten, an den Netzwerkschnittstellen verschiedene Protokolle zur Übertragung verwendet werden. Das zur Übertragung über die zweite Netzwerkschnittstelle verwendete Protokoll, das zweite Protokoll, kann insbesondere ein Protokoll sein, das durch das von damit verbundene Produktionsvorrichtung zur Übertragung verwendete oder verwendbare Protokoll gegeben ist. Unter Protokollen werden in diesem Zusammenhang Protokolle auf Schichten oberhalb der 2. Schicht im OSI-Modell verstanden.

Bei einer bevorzugten Ausführungsform der Vorrichtung ist das erste Protokoll vorzugsweise ein Protokoll mit Verschlüsselung. Beispielsweise kann sftp oder https verwendet werden. Auf diese Weise ist eine gesicherte Übertragung von Daten in das Netzwerk möglich.

Weiter können vorzugsweise bei der Vorrichtung das erste und das zweite Protokoll unterschiedlich sein. Dies hat den Vorteil, dass zur Übertragung in das Netz ein moderneres oder aktuelleres Protokoll verwendet kann als zur Übertragung von oder zu der Produktionsvorrichtung, die nicht zur Verwendung des Protokolls eingerichtet zu sein braucht. Insbesondere kann zur Übertragung an der ersten Netzwerkschnittstelle ein Protokoll mit Verschlüsselung verwendet werden kann, ohne dass die Produktionsvorrichtung über die Möglichkeit zu verfügen braucht, eine Datenübertragung über ein Protokoll mit Verschlüsselung durchführen zu können; das zweite Protokoll kann also ein Protokoll ohne Verschlüsselung sein, beispielsweise ftp oder http.

Es kann notwendig sein, von der Produktionsvorrichtung größere Datenmengen in das Netzwerk zu übertragen. Bei der Vorrichtung kann der Programmcode vorzugsweise Programmcode umfassen, bei dessen Ausführung der Aufbau einer Datenverbindung über die zweite Netzwerkschnittstelle, d. h. zwischen der Produktionsvorrichtung und der Vorrichtung, überwacht wird, und bei Erkennen eines solchen Aufbaus eine Datenverbindung über die erste Netzwerkschnittstelle, d.h. zwischen der Vorrichtung und dem Netzwerk und/oder einer Datenverarbeitungseinrichtung, beispielsweise einem Server in dem Netzwerk, aufgebaut wird. Dies hat den Vorteil, dass die Datenverbindung in das Netzwerk eher betriebsbereit ist.

Besonders bevorzugt kann bei der Vorrichtung der Programmcode Programmcode umfassen, bei dessen Ausführung die Übertragung von Daten, die in einer Datei von der Produktionsvorrichtung zu der Vorrichtung übertragen werden, in das Netzwerk, beispielsweise zu der Datenverarbeitungseinrichtung, beispielsweise dem Server, auch dann beginnen kann, wenn die Datei über die zweite Netzwerkschnittstelle noch nicht vollständig zu der Vorrichtung übertragen wurde. Insbesondere ist es nicht notwendig, die Datei zwischenzuspeichern. Dies hat den Vorteil, dass die Anforderungen an die Größe des Speichers in der Vorrichtung reduziert werden.

Weiter kann die Vorrichtung eine dritte Netzwerkschnittstelle zur Verbindung mit einer weiteren datenverarbeitenden und/ oder -erzeugenden Produktionsvorrichtung aufweisen, die über eine Signalverbindung mit dem wenigstens einen Prozessor verbunden ist. Bei der Vorrichtung kann der Programmcode dann Programmcode umfassen, bei dessen Ausführung, an der dritten Netzwerkschnittstelle über ein drittes Protokoll empfangene Datenpakete an die erste Netzwerkschnittstelle weitergeleitet und dort über ein erstes Protokoll in das Netzwerk, beispielsweise die Datenverarbeitungseinrichtung, beispielsweise den Server darin, gesendet werden, und/oder bei dessen Ausführung an der ersten Netzwerkschnittstelle über ein erstes Protokoll empfangene Datenpakete an die dritte Netzwerkschnittstelle weitergeleitet und dort über das dritte Protokoll an die weitere Produktionsvorrichtung gesendet werden und/oder bei deren Ausführung Daten zwischen der zweiten und der dritten Netzwerkschnittstelle transportiert werden. Vorzugsweise handelt es sich bei der dritten Netzwerkschnittstelle auch um eine Ethernet-Schnittstelle.

Bei der Vorrichtung kann der Programmcode dann Programmcode umfassen, bei dessen Ausführung Prozesse in Bezug auf die erste und dritte Netzwerkschnittstelle ausgeführt werden, die denen in Bezug auf die erste und zweite Netzwerkschnittstelle entsprechen, wobei der Paketfilter anders konfiguriert sein kann und das erste und das dritte Protokoll anders als das erste und zweite Protokoll gewählt sein können. Insbesondere kann der Programmcode Programmcode umfassen, bei dessen Ausführung der wenigstens eine Prozessor den Paketfilter auch auf die Datenpakete auf dem Weg zwischen der ersten und dritten Netzwerkschnittstelle anwendet. Das erste und das dritte Protokoll brauchen nicht gleich zu sein, insbesondere kann das erste Protokoll verschlüsselt sein, während das dritte unverschlüsselt sein kann.

Weiter kann der Programmcode dann Programmcode umfassen, bei dessen Ausführung über die zweite Netzwerkschnittstelle empfangene Daten über die dritte Netzwerkschnittstelle versendet werden und/oder bei der der Programmcode Programmcode umfasst, bei dessen Ausführung über die dritte Netzwerkschnittstelle empfangene Daten über die zweite Netzwerkschnittstelle versendet werden. Das dazu verwendete Protokoll kann sich dabei von den ersten, zweiten und dritten Protokollen unterscheiden. Es ist aber auch möglich, dass an der zweiten Netzwerkschnitte ein anderes Protokoll verwendet wird als an der dritten Netzwerkschnittstelle. Gemäß einer ersten Variante umfasst der Programmcode Programmcode, bei dessen Ausführung bei einem Austauschen von Daten über die beiden Netzwerkschnittstellen keine Paketfilterung durchgeführt wird. Gemäß einer zweiten Variante ist es aber auch möglich, dass der Programmcode Programmcode umfasst, bei dessen Ausführung durch den wenigstens einen Prozessor auch auf den Datenverkehr zwischen der zweiten und dritten Netzwerkschnittstelle der Paketfilter angewendet wird. Dieser muss dann entsprechend konfiguriert sein.

Vorzugsweise sind bei der Vorrichtung Daten, die Authentisierung und/oder Autorisierung und/oder Signierung und/oder Details des Netzwerks betreffen, in dem Speicher, gespeichert. Dies hat den Vorteil, dass diese Daten lokal verfügbar sind. Die Details des Netzwerks umfassen dabei nicht die Adressen vorgegebener mit dem Netz verbundener Datenverarbeitungseinrichtungen, beispielsweise Server, an die die Produktionseinrichtung Daten sendet. Vorzugsweise sind aber auch diese in der Vorrichtung gespeichert.

Besonders bevorzugt umfasst bei der Vorrichtung der Programmcode Porgrammcode oder ist der Programmcode derart gegeben, dass bei dessen Ausführung der wenigstens eine Prozessor Daten, die Authentisierung und/oder Autorisierung und/oder Signierung und/oder zur Herstellung einer Datenverbindung zu dem Netzwerk notwendige Details des Netzwerks und/oder zum Filtern von Daten, die in das Netzwerk oder aus diesem übertragen werden, verwendet werden, nur aus dem Speicher der Vorrichtung liest und/oder aus dem Netzwerk empfängt. Dies hat den Vorteil, dass es genügt, diese Daten allein in der Vorrichtung zu speichern, sodass Änderungen an der Produktionsvorrichtung bzw. deren Daten, insbesondere bei Änderungen in dem Netzwerk, nicht notwendig sind. Die Details des Netzwerks umfassen dabei nicht die Adressen vorgegebener mit diesem verbundener Datenverarbeitungseinrichtungen, beispielsweise Server, an die die Produktionseinrichtung Daten sendet. Vorzugsweise sind auch diese in der Vorrichtung gespeichert. Insbesondere können dann die Adressen von Datenverarbeitungseinrichtungen, beispielsweise eines Servers, in dem Netzwerk allein in der Vorrichtung gespeichert sein, und die Instruktionen können Instruktionen umfassen, bei deren Ausführung für eine Datenübertragung von der Produktionseinrichtung zu der Datenverarbeitungseinrichtung die Zieladresse der Datenverarbeitungseinrichtung aus dem Speicher der Vorrichtung gelesen wird.

Weiter kann die Vorrichtung vorzugsweise ein TPM (Trusted Platform Module) aufweisen, wobei Daten, die Authentisierung und/oder Autorisierung und/oder Signierung und/oder Details der Produktionsvorrichtung betreffen, in dem Speicher oder dem TPM gespeichert sind. Ein "Trusted Platform Module" (TPM) ist dabei ein Chip nach der Spezifikation der Trusted Computing Group, der einen Computer oder ähnliche Geräte um grundlegende Sicherheitsfunktionen erweitert.

Die Vorrichtung kann vorzugweise weiter eine Wartungsschnittstelle aufweisen. Der Programmcode umfasst dann Programmcode, bei dessen Ausführung durch den Prozessor Konfigurationsdaten der Vorrichtung über die Wartungsschnittstelle geändert werden können. Die Wartungsschnittstelle kann beispielsweise eine USB-Schnittstelle oder, besonders bevorzugt, eine Netzwerkschnittstelle sein. An die Schnittstelle kann dann ein Wartungscomputer angeschlossen werden, mittels dessen über die Wartungsschnittstelle ein Zugriff auf die Software und/oder die Konfigurationsdaten möglich ist. Dies erlaubt es, in einfacher Weise Konfigurationsdaten der Vorrichtung zu ändern oder die Software zu aktualisieren.

Vorzugsweise kann das erfindungsgemäße System wenigstens eine weitere datenverarbeitenden und/oder datenerzeugenden Produktionsvorrichtung, die eine Netzwerkschnittstelle aufweist, und eine weitere erfindungsgemäße Vorrichtung aufweisen, wobei die weitere Produktionsvorrichtung nur mittels der weiteren Vorrichtung mit dem Netzwerk verbunden ist, und vorzugsweise die Netzwerkschnittstelle der weiteren Produktionseinrichtung nur mit der zweiten Netzwerkschnittstelle der weiteren Vorrichtung verbunden ist. Vorzugsweise arbeiten die Produktionseinrichtungen insofern unabhängig voneinander, dass eine zweite der Produktionseinrichtungen nicht die Ergebnisse der Arbeit einer ersten der Produktionseinrichtungen verwendet. Die Verwendung jeweils einer Verbindungsvorrichtung für eine Produktionsvorrichtung hat den Vorteil, dass eine einfache und übersichtliche Konfiguration der Verbindungsvorrichtungen möglich ist und insbesondere auch der Fall einfach gehandhabt werden kann, in dem sich die Produktionsvorrichtungen unterscheiden.

Bei dem erfindungsgemäßen System umfasst die Produktionsvorrichtung bzw. die Produktionsvorrichtungen jeweils wenigstens ein Gehäuse, das die Produktionsvorrichtung umschließt. Die Signalverbindung zwischen der Vorrichtung und der Produktionsvorrichtung, vorzugsweise der zweiten Netzwerkschnittstelle der Vorrichtung und der Netzwerkschnittstelle der Produktionsvorrichtung, verläuft dann innerhalb des Gehäuses. Besonders bevorzugt kann die Vorrichtung in dem Gehäuse angeordnet sein. Bei dem Verfahren zur Verbindung der Produktionsvorrichtung ist es vorgesehen, dass die Produktionsvorrichtung ein Gehäuse umfasst, in dem wenigstens ein Anschluss der Netzwerkschnittstelle angeordnet, und dass die Verbindungsvorrichtung in dem Gehäuse angeordnet wird und die zweite Netzwerkschnittstelle über mit der Netzwerkschnittstelle der Produktionsvorrichtung verbunden wird, wobei die Anschlüsse der Netzwerkschnittstellen mittels einer Signalverbindung miteinander verbunden werden, so dass die Anschlüsse und die Signalverbindung, innerhalb des Gehäuses verlaufen.

Dabei ist das Gehäuse so beschaffen, dass es einen unauthorisierten Zugriff auf die Anschlüsse der Netzwerkschnittstellen verhindert. Verschlusselemente der Vorrichtung, beispielsweise Türen oder Klappen oder ähnliches, können dazu beispielsweise durch Schlösser gesichert sein oder von der Produktionsvorrichtung gesteuert nur auf Eingaben eines authorisierten Benutzers hin. Dies hat den Vorteil, dass verhindert wird, dass die Signalverbindung zwischen der Vorrichtung und der Produktionsvorrichtung einfach durch eine andere Signalverbindung ersetzt werden kann, mittels derer ein ungesicherter Zugriff auf die Produktionsvorrichtung über deren Netzwerkschnittstelle möglich ist. Unter der Signalverbindung wird in diesem Zusammenhang verstanden, dass diese eine physische Verbindung umfasst, beispielsweise ein LAN-Kabel.

Weiterer Gegenstand der vorliegenden Erfindung ist ein Verfahren nach Anspruch 14 zur Aktualisierung eines erfindungsgemäßen Systems, bei dem, vorzugsweise auf Veränderungen in dem Netzwerk hin, nur Konfigurationsdaten und/oder Programmcode der Datenübertragungsvorrichtung geändert werden, oder bei dem, vorzugsweise in Reaktion auf eine neu erkannte Angriffsmöglichkeit auf das System oder dessen Datenübertragungsvorrichtung, nur der Programmcode und/oder die Konfigurationsdaten der Datenübertragungsvorrichtung geändert werden oder nur die Datenübertragungsvorrichtung ausgetauscht wird. Diese Möglichkeiten der Aktualisierung vermeiden jegliche Änderung an der Produktionsvorrichtung.

Die Erfindung wird im Folgenden noch weiter beispielhaft an Hand der Zeichnungen erläutert. Es zeigen:
- Fig. 1: eine schematische Ansicht eines Systems zur Bearbeitung von Wertdokumenten und ein Netzwerk;
- Fig. 2: eine schematische Darstellung einer Produktionsvorrichtung in Form einer Wertdokumentbearbeitungsvorrichtung des Systems in Fig. 1,
- Fig. 3: eine schematische Darstellung einer Verbindungsvorrichtung in Fig. 1,
- Fig. 4: eine schematische Darstellung der Wertdokumentbearbeitungsvorrichtung des Systems in Fig. 2 nach Verbindung mit dem Netzwerk mittels der Verbindungsvorrichtung in Fig. 3,
- Fig. 5: eine schematische Darstellung eines Teils des Systems in Fig. 1, mit der Wertdokumentbearbeitungsvorrichtung, der Verbindungsvorrichtung und einem ein Wartungscomputer,
- Fig. 6: eine schematische Darstellung einer Verbindungsvorrichtung mit einem TPM, und
- Fig. 7: eine schematische Darstellung eines gegenüber Fig. 1 modifizierten Systems, das zwei Wertdokumentbearbeitungsvorrichtungen aufweist, die jeweils über eine Verbindungsvorrichtung mit dem Netzwerk verbunden sind.

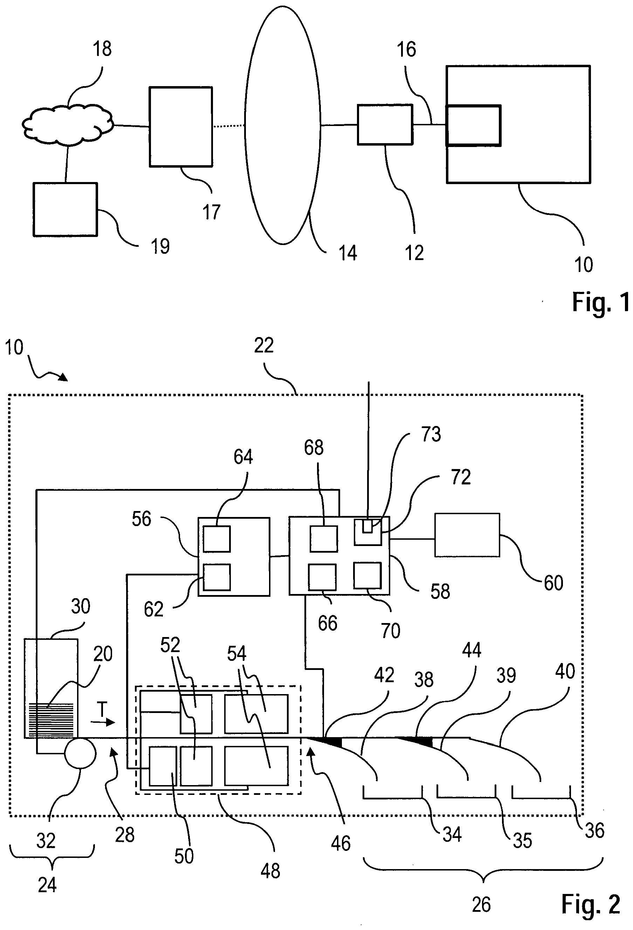

In Fig. 1 umfasst ein System zur Bearbeitung von Wertdokumenten, im Beispiel Banknoten, eine Wertdokumentbearbeitungsvorrichtung 10, im Beispiel eine Vorrichtung zur Prüfung und Sortierung von Banknoten, eine Verbindungsvorrichtung 12 und ein Netzwerk 14, im Beispiel ein LAN eines Betreibers des Systems, im Folgenden als Betreibernetzwerk bezeichnet. Die Wertdokumentbearbeitungsvorrichtung 10 und die Verbindungsvorrichtung 12 sind über genau eine Datenverbindung 16, im Beispiel eine Signalverbindung in Form eines Netzwerkkabels, miteinander verbunden. Die Verbindungsvorrichtung 12 ist weiter mit dem Netzwerk 14 zur Übertragung von Daten verbunden. Mit dem Netzwerk 14 können weitere, in Fig. 1 nicht gezeigte, Vorrichtungen des Betreibers verbunden sein. Das System stellt insoweit ein System mit einer datenverarbeitenden und/oder datenerzeugenden Produktionsvorrichtung und einer mit dieser verbundenen Verbindungsvorrichtung dar. In diesem Ausführungsbeispiel ist das Netzwerk 14 über eine optionale Schnittstelleneinrichtung 17 mit einem öffentlich zugänglichen Netzwerk 18, beispielsweise dem Internet, verbunden; die Schnittstelleneinrichtung kann in anderen Ausführungsbeispielen über eine Firewall verfügen. Über dieses kann eine Verbindung zu einer zentralen Datenverarbeitungseinrichtung 19, beispielsweise einem Server, des Betreibers, beispielsweise an einem anderen Ort aufgebaut werden, um Daten dorthin zu übertragen oder von dort zu empfangen. In anderen Ausführungsbeispielen braucht dies jedoch nicht unbedingt der Fall zu sein. Die Wertdokumentbearbeitungsvorrichtung 10 ist daher nur über die Verbindungsvorrichtung 12 und die Datenverbindung 16 zu dieser mit dem Betreibernetzwerk 14 verbunden.

Die Wertdokumentbearbeitungsvorrichtung 10 in Fig. 2, im Beispiel eine Vorrichtung zur Bearbeitung von Wertdokumenten 20 in Form von Banknoten, ist zur Sortierung von Wertdokumenten 20 in Abhängigkeit von der Erkennung der Echtheit und des Zustands von bearbeiteten Wertdokumenten in Echtzeit ausgebildet. Die im Folgenden beschriebenen Komponenten der Vorrichtung 10 sind in einem nur schematisch gezeigten Gehäuse 22 der Vorrichtung 10 angeordnet oder an diesem gehalten, soweit sie nicht als extern bezeichnet sind.

Die Wertdokumentbearbeitungsvorrichtung 10 verfügt über eine Zuführeinrichtung 24 zur Zuführung von Wertdokumenten 20, eine Ausgabeeinrichtung 26 zur Aufnahme bearbeiteter, d. h. sortierter Wertdokumente, und eine Transporteinrichtung 28 zum Transportieren von vereinzelten Wertdokumenten von der Zuführeinrichtung 24 zu der Ausgabeeinrichtung 26.

Die Zuführeinrichtung 24 umfasst im Beispiel ein Eingabefach 30 für einen Wertdokumentstapel und einen Vereinzler 32 zum Vereinzeln von Wertdokumenten aus dem Wertdokumentstapel in dem Eingabefach 30 und zum Zuführen der vereinzelten Wertdokumente zu der Transporteinrichtung 28.

Die Ausgabeeinrichtung 26 weist im Beispiel drei Ausgabeabschnitte 34, 35 und 36 auf, in die bearbeitete Wertdokumente sortiert nach dem Ergebnis der Bearbeitung sortiert werden können. Im Beispiel umfasst jeder der Abschnitte ein Stapelfach und ein nicht gezeigtes Stapelrad, mittels dessen zugeführte Wertdokumente in dem jeweiligen Stapelfach abgelegt werden können. In anderen Ausführungsbeispielen kann einer der Ausgabeabschnitte durch eine Einrichtung zur Vernichtung von Banknoten ersetzt sein.

Die Transporteinrichtung 28 verfügt über wenigstens zwei, im Beispiel drei Zweige 38,39 und 40, an deren Enden jeweils einer der Ausgabeabschnitte 34 bzw. 35 bzw. 36 angeordnet ist, und an den Verzweigungen über durch Stellsignale steuerbare Weichen 42 und 44, mittels derer Wertdokumente in Abhängigkeit von Stellsignalen den Zweigen 38 bis 40 und damit den Ausgabeabschnitten 34 bis 36 zuführbar sind.

An einem durch die Transporteinrichtung 28 definierten Transportpfad 46 zwischen der Zuführeinrichtung 24, im Beispiel genauer dem Vereinzeler 32, und der in Transportrichtung ersten Weiche 42 nach dem Vereinzeler 32 ist eine Sensoreinrichtung 48 angeordnet, die während des Vorbeitransports von Wertdokument1en physikalische Eigenschaften der Wertdokumente misst und die Messergebnisse wiedergebende Sensorsignale bildet. In diesem Beispiel verfügt die Sensoreinrichtung 48 über drei Sensoren, nämlich einen optischen Remissionssensor 50, der ein Remissionsfarbbild und ein Remissions-IR-Bild des Wertdokuments erfasst, einen optischen Transmissionssensor 52, der ein Transmissionsfarbbild und eine Transmissions-IR-Bild des Wertdokuments erfasst, und einen Transmissionsultraschallsensor 54, der ortsaufgelöst als Ultraschalleigenschaft die Ultraschalltransmission des Wertdokuments erfasst bzw. misst und im Folgenden der Einfachheit halber nur als Ultraschallsensor bezeichnet wird. Die von den Sensoren gebildeten Sensorsignale entsprechen Messdaten bzw. Rohdaten der Sensoren, die je nach Sensor bereits einer Korrektur, beispielsweise in Abhängigkeit von Kalibrierdaten und/ oder Rauscheigenschaften, unterzogen worden sein können.

Zur Auswertung der Signale der Sensoren verfügt die Wertdokumentbearbeitungsvorrichtung 10 über eine Auswerteeinrichtung 56, die über Signalverbindungen mit der Sensoreinrichtung 48 verbunden ist; sie wertet Sensorsignale der Sensoreinrichtung 48, die diese für ein Wertdokument erfasst und die wenigstens eine vorzugsweise physikalische Eigenschaft des jeweiligen Wertdokuments darstellen, aus und ermittelt aus diesen für das jeweilige Wertdokument eine Sortierklasse und gibt ein die Sortierklasse darstellendes Sortiersignal aus.

Zur Steuerung der Wertdokumentbearbeitungsvorrichtung 10 besitzt diese ferner eine Steuereinrichtung 58, die über Signalverbindungen unter anderem mit der Auswerteeinrichtung 56, der Zuführeinrichtung 24, insbesondere dem Vereinzeler 32, der Ausgabeeinrichtung 26 und der Transporteinrichtung 28, insbesondere den Weichen 42 und 44, verbunden ist. Die Steuereinrichtung 58 steuert unter anderem die Transporteinrichtung 28 in Abhängigkeit von Sortiersignalen der Auswerteeinrichtung 56.

Zur Erfassung und Anzeige von Bedienungsdaten und gegebenenfalls Ausgabe bestimmter Betriebsdaten verfügt die Wertdokumentbearbeitungsvorrichtung 10 über eine Ein-/Ausgabeeinrichtung 60, die über Signalverbindungen mit der Steuereinrichtung 48 verbunden ist. Die Ein-/Ausgabeeinrichtung 60 ist im Beispiel durch eine berührungsempfindliche Anzeigeeinrichtung ("touch screen") realisiert. In anderen Ausführungsbeispielen kann sie beispielsweise eine Tastatur und eine Anzeigeeinrichtung, beispielsweise eine LCD-Anzeige umfassen.

Die Auswerteeinrichtung 56 verfügt neben entsprechenden in den Figuren nicht gezeigten Datenschnittstellen für die Sensoreinrichtung 48 bzw. deren Sensoren über wenigstens einen Prozessor 62 und einen mit dem wenigstens einen Prozessor 62 verbundenen Speicher 64, in dem Programmcode für ein Betriebssystem und wenigstens ein Computerprogramm mit Programmcode gespeichert ist. Bei Ausführung des Betriebssystems und des Computerprogramms erfasst die Auswerteeinrichtung 56 bzw. deren wenigstens eine Prozessor 62 die Sensorsignale bzw. Messwerte der Sensoreinrichtung 48 für ein jeweiliges Wertdokument, und wertet diese, insbesondere zur Ermittlung einer Echtheitsklasse und/oder einer Zustandsklasse eines bearbeiteten Wertdokuments, aus; sie ermittelt dabei in Abhängigkeit von den Sensorsignalen für das jeweiligen Wertdokument eine von mehreren vorgegebenen Sortierklassen und erzeugt ein dieser jeweils zugeordnetes Sortiersignal. Die Sortierklassen sind in Abhängigkeit von den Echtheits- und Zustandsklassen gegeben.

Die Steuereinrichtung 58 verfügt über eine in den Figuren nicht gezeigte Datenschnittstelle zur Verbindung mit der Auswerteeinrichtung 56, mit der sie über eine Datenverbindung verbunden ist. Weiter verfügt sie über wenigstens einen Prozessor 66 und einen mit dem wenigstens einen Prozessor 66 verbundenen Speicher 68, in dem Programmcode für ein Betriebssystem und für wenigstens ein Computerprogramm mit Programmcode gespeichert ist; der Programmcode umfasst vorzugsweise Konfigurationsdaten, die zur oder bei der Ausführung des Programmcodes verwendet werden. Weiter ist eine Speichereinrichtung 70 für Betriebs- und/oder Messdaten vorgesehen. Bei Ausführung des wenigstens einen Computerprogramms bzw. dessen Programmcodes (in Verbindung mit dem Betriebssystem bzw. dessen Programmcodes) steuert die Auswerteeinrichtung 56 bzw. der Prozessor 66 unter anderem in Abhängigkeit von Sortiersignalen der Auswerteeinrichtung 56 die Transporteinrichtung 46, insbesondere deren Weichen so an, dass ein jeweiliges Wertdokument, für das eine dem Sortiersignal entsprechende Sortierklasse ermittelt wurde, in ein dieser Sortierklasse zugewiesenen Ausgabeabschnitt transportiert wird.

Darüber hinaus speichert die Steuereinrichtung 58 bei Ausführen des Programmcodes während des Betriebs erfasste Daten, beispielsweise Messdaten und/oder Sortierergebnisse, in der Speichereinrichtung 70.

Weiter steuert die Steuereinrichtung 58 die Ein- /Ausgabeeinrichtung 60, unter anderem zur Anzeige von Bedienungsdaten, an und erfasst über diese Bedienungsdaten, die Eingaben eines Bedieners entsprechen.

Die Steuereinrichtung 58 besitzt weiter eine Netzwerkschnittstelle 72 über die sie mit einem Netzwerk, im Beispiel mittels TCP/IP, verbindbar ist. Die Netzwerkschnittstelle ist eine Ethernet-Schnittstelle. Sie verfügt über einen Anschluss 73 für ein Netzwerkkabel, im Beispiel eine Anschlussbuchse, und ist so angeordnet, dass letztere innerhalb des Gehäuses 22 so angeordnet ist, dass von außerhalb des Gehäuses nicht so zugänglich ist, dass von außerhalb ein Netzwerkkabel von dem Anschluss entfernt oder mit diesem verbunden werden kann. Der Programmcode in dem Speicher 68 umfasst Programmcode zum Betreiben der Netzwerkschnittstelle 72. In diesem Ausführungsbeispiel ist die Netzwerkschnittstelle 72 mit einer entsprechenden Netzwerkschnittstelle der Verbindungsvorrichtung 12 verbunden. Bei Ausführung des Programmcodes in dem Speicher 68 überwacht die Steuereinrichtung 58 beispielsweise das Eintreten eines vorgegebenen Ereignisses, beispielsweise dem Ablauf eines vorgegebenen Zeitintervalls oder der Erfassung einer vorgegebenen Benutzereingabe, und überträgt bei Eintreten des Ereignisses die in der Speichereinrichtung 70 gespeicherten Daten über die Netzwerkschnittstelle 72 unter Verwendung eines ersten Übertragungsprotokolls, im Beispiel ftp, wozu der Programmcode entsprechende Instruktionen enthält. Die Daten werden in das Betreibernetzwerk 14 und von dort über die Schnittstelleneinrichtung 17 und das Internet 18 an die Datenverarbeitungsvorrichtung 19 übertragen.

Zur Konfiguration des Betriebssystems, insbesondere auch in Bezug auf die Netzwerkschnittstelle 72, im Beispiel eine Ethernet-Karte, sind im dem Speicher 68 Konfigurationsdaten gespeichert, auf die das Betriebssystem und gegebenenfalls anderer Programmcode während der Ausführung zugreift.

Das Gehäuse 22 verfügt über Öffnungen, durch die Zugriff auf das Innere der Vorrichtung ermöglicht wird. Diese sind jedoch, soweit sie nicht nur zur bestimmungsgemäßen Verwendung dienen, gegen unbefugtes Öffnen geschützt, im Beispiel durch Schlösser. Insbesondere ist die Netzwerkschnittstelle 72 so angeordnet, dass von außerhalb des geschlossenen Gehäuses kein Zugriff auf den Anschluss 73 möglich ist, um an diesen Verbindungen anzuschließen oder von diesem eine Verbindung zu entfernen.

Im Betrieb werden Wertdokumente aus der Zuführeinrichtung 24 vereinzelt und an der Sensoreinrichtung 48 vorbei bzw. durch diese hindurch transportiert. Die Sensoreinrichtung 48 erfasst bzw. misst physikalische Eigenschaften des jeweils an ihr vorbei bzw. durch sie hindurch transportierten Wertdokuments und bildet Sensorsignale bzw. Messdaten, die die Messwerte für die physikalischen Eigenschaften beschreiben. Die Auswerteeinrichtung 56 klassifiziert in Echtzeit in Abhängigkeit von den Sensorsignalen der Sensoreinrichtung 48 für ein Wertdokument und von in der Auswerteeinrichtung 56 gespeicherten Klassifizierungsparametern das Wertdokument in eine von vorgegebenen Sortierklassen, im Beispiel Echtheits- und/oder Zustandsklassen. Die Zuordnung zu einer der vorgegebenen Sortierklassen bzw. die Klassifizierung erfolgt dabei in Abhängigkeit von wenigstens einem hierfür vorgegebenen Kriterium. Sie Auswerteeinrichtung 56 gibt nach der Ermittlung der jeweiligen Sortierklasse ein entsprechendes Signal an die Steuereinrichtung 58 ab. Diese empfängt das Signal und steuert durch Abgabe von Stellsignalen die Transporteinrichtung 28, hier genauer die Weichen 42 bzw. 44 so an, dass das Wertdokument entsprechend seiner bei der Klassifizierung ermittelten Klasse in einen der Klasse zugeordneten Ausgabeabschnitt der Ausgabeeinrichtung 26 ausgegeben wird.

Das Vereinzeln der Wertdokumente und deren Transport kann bei leistungsfähigen Wertdokumentbearbeitungsvorrichtungen mit einer Geschwindigkeit von bis zu 44 Banknoten/Sekunde erfolgen, so dass alle Komponenten der Vorrichtung, insbesondere auch die Auswerteeinrichtung 56 und die Steuereinrichtung 58, in Echtzeit sehr präzise, schnell und gut aufeinander abgestimmt arbeiten müssen. Im Fall einer Geschwindigkeit von 40 Banknoten/Sekunde muss die Auswertung der Messdaten für ein Wertdokument spätestens nach 0,025 Sekunden abgeschlossen sein. Offensichtlich ist eine fehlerfreie, häufige Aktualisierung auch nur einer einzelnen Komponente, insbesondere der Software, sehr aufwändig und gegebenenfalls auch fehleranfällig.

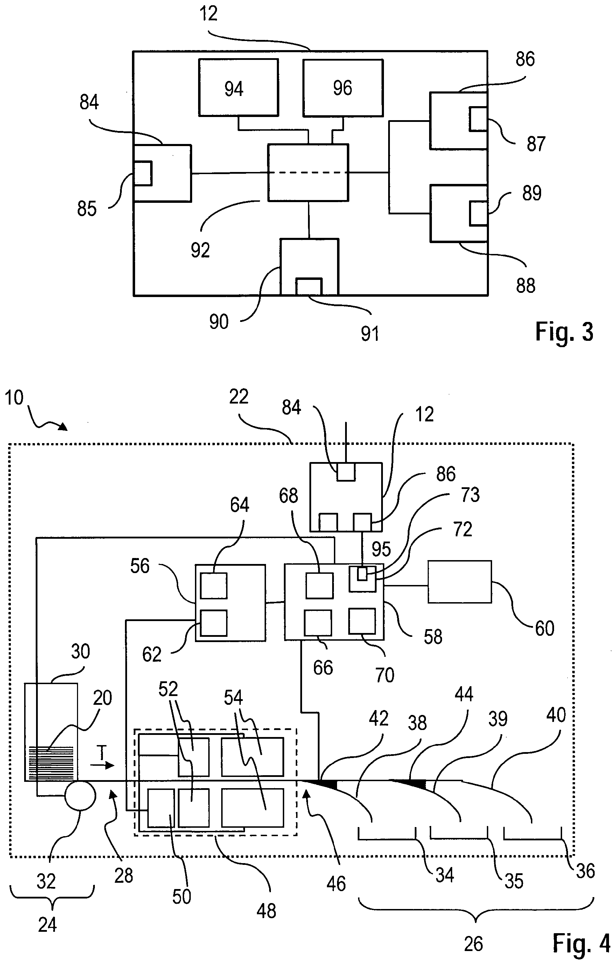

Die in Fig. 3 grob schematisch veranschaulichte Verbindungsvorrichtung 12 umfasst in einem nicht näher gezeigten, optionalen Gehäuse auf einer Leiterplatte vier Netzwerkschnittstellen 84 bis 90, einen mit diesen über Datenleitungen verbundenen Prozessor 92, einen Hauptspeicher 94, auf den der Prozessor 92 zugreifen kann, und einen Speicher 96, in dem Programmcode mit Instruktionen noch zu beschreibender Software gespeichert sind; in diesem Ausführungsbeispiel umfasst der Speicher 96 einen nicht-flüchtigen Speicher, insbesondere eine Flash-Speicherkarte. Auf der Leiterplatte können noch weitere Komponenten angeordnet sein, die zum Zusammenwirken der Netzwerkschnittstellen 84 bis 90, des Prozessors 92, des Hauptspeichers 94 und des Speichers 96 vorgesehen sind. Die Netzwerkschnittstellen 84 bis 90 sind im Beispiel Ethernet-Schnittstellen und verfügen über Anschlüsse, hier Anschlussbuchsen 85, 87, 89 bzw. 91, für ein Netzwerkkabel.

In dem Speicher 96 ist als Software Programmcode gespeichert, der von dem Prozessor 92 ausgeführt werden kann bzw. ausgeführt wird. Teile des Programmcodes bilden unter anderem ein Betriebssystem der Verbindungsvorrichtung 12. Die Software umfasst auch Konfigurationsdaten, die in dem Speicher 96 gespeichert und die der Prozessor 92 und gegebenenfalls weitere Komponenten der Verbindungsvorrichtung 12 bei Ausführung des Programmcodes verwenden.

Die Netzwerkschnittstelle 84 ist zur Verbindung mit dem Betreibernetzwerk 14 vorgesehen, die Netzwerkschnittstellen 86 und 88 zur Verbindung mit Wertdokumentbearbeitungsvorrichtungen und die Netzwerkschnittstelle 90 mit einem optionalen, nicht dauerhaft mit der Verbindungsvorrichtung verbundenen Service-Rechner, beispielsweise einem Notebook. Das Betriebssystem ist durch entsprechende Einträge in den Konfigurationsdaten entsprechend konfiguriert. Im Beispiel ist die Netzwerkschnittstelle 86 mit der Wertdokumentbearbeitungseinrichtung 10, genauer der Netzwerkschnittstelle 72 über die Datenleitung 16 verbunden.

Weiterhin umfasst der Programmcode Programmcode mit Instruktionen und Konfigurationsdaten für eine Firewall in Form eines Paketfilters, bei dessen Ausführung durch den Prozessor 92 ein Paketfilter bereitgestellt wird, mittels dessen der Netzwerkverkehr über die Netzwerkschnittstellen 84 bis 90 gefiltert bzw. kontrolliert werden kann. Die gespeicherten Konfigurationsdaten umfassen unter anderem Daten für Filterregeln, die Angaben enthalten, ob und wie über eine jeweilige der Netzwerkschnittstellen kommende Datenpakete weitergeleitet werden. Der Paketfilter arbeitet auf Schicht 2 des OSI-Modells und filtert Datenpakete wenigstens auf der Basis von Daten von Headern der Datenpakte in den Schichten oberhalb der 2. Schicht des OSI-Modells.

Wie in Fig. 3 gezeigt ist die Verbindungseinrichtung 12 so in dem Gehäuse 22 angeordnet und die Verbindung zwischen der Netzwerkschnittstelle 72 der Wertdokumentbearbeitungsvorrichtung 10 und der zweiten Netzwerkschnittstelle 86 der Verbindungsvorrichtung 12, im Beispiel ein Verbindungskabel 95, genauer ein LAN-Kabel, so angeordnet, dass wenigstens die Anschlüsse der genannten Netzwerkschnittstellen und das Verbindungskabel 95 vollständig innerhalb des Gehäuses 12 angeordnet sind, so dass ohne ein Öffnen des Gehäuses 22 kein Zugriff auf die Anschlüsse und das Verbindungskabel 95 möglich ist, so dass das Verbindungskabel von den Anschlüssen entfernt werden kann. Ein Austauschen von Netzwerkkabeln und damit die Einrichtung einer unmittelbaren Datenverbindung mit einem Fremdsystem kann so einfach erschwert oder sogar verhindert werden.

Die Wertdokumentbearbeitungsvorrichtung 10 und die Verbindungsvorrichtung 12 benötigen jeweils Konfigurationsdaten, die bei der Ausführung von Software der Vorrichtungen verwendet wird. Diese Konfigurationsdaten sind als Teil des Programmcodes anzusehen.

Da die Wertdokumentbearbeitungsvorrichtung 10 nur über die Verbindungsvorrichtung 12 auf das Betreibernetz 14 bzw. damit verbundene Einrichtungen zugreifen kann, brauchen die Konfigurationsdaten der Wertdokumentbearbeitungsvorrichtung 10 außer einer IP-Adresse der Verbindungsvorrichtung12 keine weiteren Daten zu enthalten, die Einrichtungen in dem Betreibernetzwerk 14 oder mit dem Betreibernetzwerk verbundenen Einrichtungen außerhalb des Betreibernetzwerks betreffen. Änderungen in dem Betreibernetzwerk oder damit verbundenen Netzwerken brauchen daher keine Änderungen bei der Wertdokumentbearbeitungsvorrichtung 10 nach sich zu ziehen.

Ein direkter Zugriff auf die Wertdokumentbearbeitungsvorrichtung 10 über das Betreibernetzwerk 14 ist nicht möglich, sondern nur ein Zugriff über die Verbindungsvorrichtung 12. Daten für einen direkten Zugriff auf die Wertdokumentbearbeitungsvorrichtung 10, beispielsweise deren IP-Adresse oder ähnliches, brauchen in dem Betreibernetzwerk 14 daher nicht bekannt und insbesondere gespeichert zu sein. Da die Wertdokumentbearbeitungsvorrichtung 10 keine weiteren Netzwerkschnittstellen zur Verbindung mit einem Netzwerk aufweist, ist kein Zugriff auf diese über eine andere Schnittstelle möglich.

Die Konfigurationsdaten der Wertdokumentbearbeitungsvorrichtung 10 umfassen daher nur die IP-Adresse der Verbindungsvorrichtung 12.

Die Konfigurationsdaten der Verbindungsvorrichtung 12 sind umfangreicher und umfassen unter anderem die IP-Adressen der mit einer der Netzwerkschnittstellen 86 oder 88, im Beispiel der mit der Netzwerkschnittstelle 86, verbundenen Wertdokumentbearbeitungsvorrichtung 10 und vorzugsweise wenigstens eine IP-Adresse im Betreibernetzwerk 14, beispielsweise eine IP-Adresse der Datenverarbeitungseinrichtung19, im Beispiel des Servers 19. Vorzugsweise ist der IP-Adresse im Betreibernetzwerk 14 zugeordnet auch eine in der Wertdokumentbearbeitungsvorrichtung 10 als Konfigurationsparameter gespeicherte Kennung, beispielsweise eine interne IP-Adresse zur Verwendung zwischen der Verbindungsvorrichtung 12 und der Wertdokumentbearbeitungsvorrichtung 10, gespeichert.

Eine Kommunikation von der Wertdokumentbearbeitungsvorrichtung 10 zu der Einrichtung in dem Betreibernetzwerk 14 oder einer mit dem Betreibernetzwerk verbundenen Datenverarbeitungseinrichtung, beispielsweise dem Server 19, kann folgendermaßen erfolgen. Die Wertdokumentbearbeitungsvorrichtung 10 umfasst Programmcode und Konfigurationsparameter, bei dessen Ausführung bei einem Verbindungsaufbau zu der Einrichtung die durch die Konfigurationsparameter der Wertdokumentbearbeitungsvorrichtung 10 vorgegebene interne IP-Adresse verwendet wird, die die Einrichtung in der Wertdokumentbearbeitungsvorrichtung 10 kennzeichnet. Der in der Verbindungsvorrichtung 12 gespeicherte Programmcode enthält Instruktionen und Konfigurationsdaten, so dass bei der Ausführung der Instruktionen ein Verbindungsaufbau von der Wertdokumentbearbeitungsvorrichtung 10 zu der vorgegebenen internen IP-Adresse erkannt und die interne IP-Adresse durch die wenigstens eine IP-Adresse im Betreibernetzwerk 14 oder einem damit verbundenen Netzwerk, die in den Konfigurationsdaten der Verbindungsvorrichtung 12 enthalten ist, ersetzt wird.

Weiter enthalten die Konfigurationsdaten Konfigurationsdaten für die Firewall, im Beispiel Regeln für den Paketfilter. Im Beispiel sind die Filterregeln so gewählt, dass nur TCP/IP-Verbindungen über vorgegebene Ports ermöglicht werden. Diese sind so gewählt, dass ein Datentransport nur über Ports ermöglicht wird, für die die Verbindungsvorrichtung 12 konfiguriert ist.

In anderen Ausführungsbeispielen können die Konfigurationsdaten darüber hinaus Daten zu den verwendeten Übertragungsprotokollen umfassen, so dass nur diese verwendet werden können. Aktualisierung der Firewall oder Änderungen in Bezug auf das Betreibernetzwerk, beispielsweise der IP-Adressen oder des verwendeten Übertragungsprotokolls, ziehen so nur Änderungen für Verbindungsvorrichtung 12 nach sich.

Die Verbindungsvorrichtung 12, insbesondere deren Software, ist so eingerichtet, dass sie eine Datenübertragung zwischen dem Betreibernetzwerk 14 und der Wertdokumentbearbeitungsvorrichtung 10, beispielsweise eine Datenübertragung von der Wertdokumentbearbeitungsvorrichtung 10 über die Verbindungsvorrichtung 12, zu wenigstens einer Einrichtung in dem Betreibernetzwerk 14, oder umgekehrt unter Verwendung von gleichen oder in diesem Ausführungsbeispiel unterschiedlichen Übertragungsprotokollen ermöglicht. Bei den Übertragungsprotokollen handelt es sich um solche, die Schichten oberhalb der zweiten Schicht im OSI-Modell, bzw. oberhalb der TCP/IP-Netzzugangsschicht (link layer), betreffen.

Der in der Verbindungsvorrichtung 12 gespeicherte Programmcode enthält dazu Instruktionen, bei deren Ausführung Daten aus dem Betreibernetzwerk 14 zu der Wertdokumentbearbeitungsvorrichtung 10 bzw. von der Wertdokumentbearbeitungsvorrichtung 10 in das Betreibernetzwerk 14 weitergeleitet werden, wobei für die Übertragung der Daten zwischen der Verbindungsvorrichtung 12 und der Wertdokumentbearbeitungsvorrichtung 10 ein erstes Übertragungsprotokoll und die Übertragung der Daten zwischen der Verbindungsvorrichtung 12 und dem Betreibernetzwerk 14 ein zweites Übertragungsprotokoll verwendet wird. Das erste Übertragungsprotokoll ist in diesem Ausführungsbeispiel durch die Wertdokumentbearbeitungsvorrichtung 10, insbesondere deren Steuereinrichtung 58 bzw. deren Software, vorgegeben, die mit der jeweiligen Netzwerkschnittstelle 86 bzw. 88, hier der Netzwerkschnittstelle 86, verbunden ist. In anderen Ausführungsbeispielen kann durch Konfigurationsdaten in der Verbindungsvorrichtung 12 festgelegt sein, welches Protokoll für die Verbindung in das Netzwerk 12 bzw. zu einer damit verbundenen Datenverarbeitungseinrichtung, beispielsweise dem Server 19, verwendet werden soll. Der Programmcode enthält dann entsprechende Instruktionen, die in Abhängigkeit von den Konfigurationsdaten für die Übertragung ein entsprechendes Protokoll benutzen.

Der in der Verbindungsvorrichtung 12 gespeicherte Programmcode enthält insbesondere Instruktionen für die Übertragung von Daten, die über eine der Netzwerkschnittstellen 86 und 88 für Wertdokumentbearbeitungsvorrichtungen mittels eines ersten Übertragungsprotokolls übertragen wurden, über die Netzwerkschnittstelle 84 zu dem Betreibernetzwerk 14 mittels eines zweiten Übertragungsprotokolls bzw. für die Übertragung von Daten, die über die Netzwerkschnittstelle 84 zu dem Betreibernetzwerk 14 mittels des zweiten Übertragungsprotokolls übertragen wurden, über eine der Netzwerkschnittstellen 86 und 88 für Wertdokumentbearbeitungsvorrichtungen mittels des ersten Übertragungsprotokolls.

Im Beispiel sind die Übertragungsprotokolle Übertragungsprotokolle für die Übertragung von Dateien. Insbesondere ist die Wertdokumentbearbeitungsvorrichtung 10 im Beispiel dazu ausgebildet über die Netzwerkschnittstelle Daten mittels ftp (file tranfer protocol) zu senden bzw. zu empfangen. Genauer ist daher das erste Übertragungsprotokoll ftp. Das zweite Übertragungsprotokoll ist ein verschlüsseltes Protokoll, im Beispiel sftp (SSH File Transfer Protocol oder Secure File Transfer Protocol).

Die Instruktionen des Programmcodes der Verbindungsvorrichtung 12 umfassen daher Instruktionen für einen ftp-Server und für einen sftp-Client.

Ein Beispiel für eine Datenübertragung von der Wertdokumentbearbeitungsvorrichtung 10 in das Betreibernetzwerk 14 ist in Fig. grob schematisch veranschaulicht.

Die Steuereinrichtung der Wertdokumentbearbeitungsvorrichtung 10 ist dazu ausgebildet, das Eintreten eines Ereignisses in bzw. an der Wertdokumentbearbeitungsvorrichtung 10 zu überwachen, beispielsweise eine vorgegebene Benutzereingabe. Dann wird zuerst wird ausgehend von der Wertdokumentbearbeitungsvorrichtung 10 eine Verbindung von der Wertdokumentbearbeitungsvorrichtung 10 zu der Verbindungsvorrichtung 12 über eine der Netzwerkschnittstellen 86 und 88, im Beispiel 86, aufgebaut, die auf ftp basiert. Dazu verfügt die Steuereinrichtung 68 der Wertdokumentbearbeitungsvorrichtung 10 über einen ftp-Client, mittels dessen eine Verbindung zu dem ftp-Server auf Verbindungsvorrichtung 12 aufgebaut wird.

Die Software der Verbindungsvorrichtung 12 enthält Instruktionen, bei deren Ausführung überwacht wird, ob eine ftp-Verbindung zu einer über das Netzwerk 14 erreichbaren Datenverarbeitungseinrichtung, im Beispiel dem Server 19, aufgebaut wird. Wird dies erkannt, baut der ftp-client der Verbindungsvorrichtung 12 zu der Einrichtung über das Netzwerk 14 eine Verbindung auf, die das zweite Übertragungsprotokoll verwendet.

Die Software der Verbindungsvorrichtung 12 enthält Instruktionen, bei deren Ausführung der Empfang von Datenpaketen über die Netzwerkschnittstelle überwacht wird und bei Empfang von Daten mit einem vorgegebenen Datenvolumen diese Daten über die Netzwerkschnittstelle über das zweite Übertragungsprotokoll in das Netzwerk 14 mittels des zweiten Übertragungsprotokolls übertragen werden.

Bei der Weiterleitung einer Datei wird in diesem Ausführungsbeispiel eine Datei daher nicht unbedingt vollständig von der Verbindungsvorrichtung 12 empfangen, bevor sie weitergeleitet wird. Die Weiterleitung, also das Versenden, kann bereits beginnen, wenn die Datei noch nicht vollständig empfangen wurde.

Die Übertragung der Daten in das Netzwerk 14 wird beendet, wenn alle über die jeweilige Netzwerkschnittstelle, hier die Schnittstelle 86 empfangenen Daten weitergeleitet wurden.

Die Verbindungen können danach wieder abgebaut werden.

Da von dem Betreibernetzwerk 14 aus die Wertdokumentbearbeitungsvorrichtung 10 nicht direkt erreichbar und insbesondere nicht sichtbar ist, muss eine Kommunikation mit dieser ausschließlich über die Verbindungsvorrichtung 12 erfolgen. Im Benutzernetzwerk 14 braucht daher nur die IP-Adresse der Verbindungsvorrichtung 12 bekannt zu sein. Diese kann im Prinzip beliebig gewählt sein.

Durch die Möglichkeit, zwischen der Verbindungsvorrichtung 12 und der Wertdokumentbearbeitungsvorrichtung 10 das erste Übertragungsprotokoll verwenden zu können und zwischen der Verbindungsvorrichtung 12 und dem Betreibernetzwerk 14 bzw. einer Datenverarbeitungsvorrichtung darin ein anderes Übertragungsprotokoll, können selbst verglichen mit der Entwicklung in der Datenverarbeitung alte Protokolle als erste Übertragungsprotokolle verwendet werden, während zum Betreibernetzwerk 14 hin modernere Protokolle Verwendung finden können. Auch hierdurch können Softwareaktualisierungen der Wertdokumentbearbeitungsvorrichtung 10, die aufgrund einer Modernisierung des Betreibernetzwerks 14 notwendig werden könnten, durch die viel einfachere und robustere Aktualisierung der Verbindungsvorrichtung 12 vermieden werden.

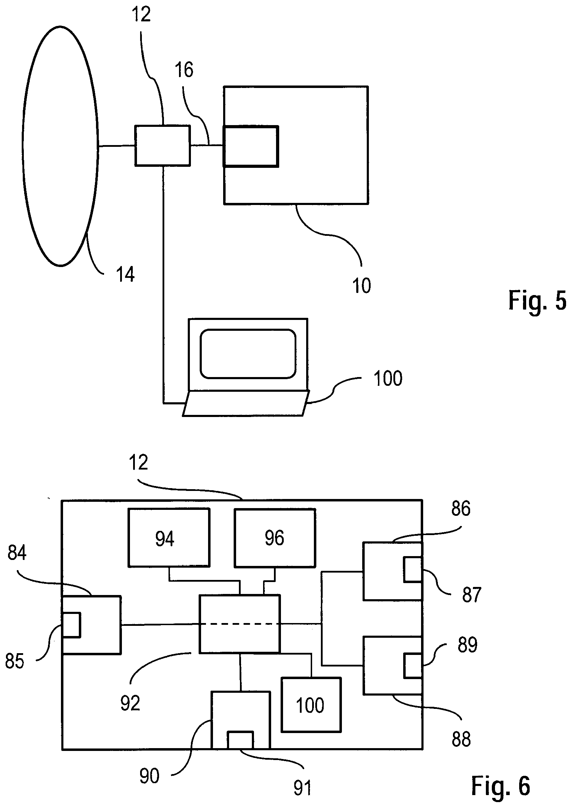

Der Programmcode umfasst auch Programmcode, bei dessen Ausführung durch den Prozessor es möglich ist, mit einem über die Netzwerkstelle 90 verbundenen Wartungscomputer 100 auf die Verbindungsvorrichtung 12 zuzugreifen, beispielsweise um deren Konfigurationsdaten zu ändern. Dies ist in Fig. 5 veranschaulicht, in der nur das Betreibernetzwerk 14, die damit über die Verbindungsvorrichtung 12 und die mit letzterer über die Datenverbindung 16 verbundene Wertdokumentbearbeitungsvorrichtung 10 zeigt.

Da von dem Betreibernetzwerk 14 aus ein Zugriff auf die Wertdokumentbearbeitungsvorrichtung 10 nur über die Verbindungsvorrichtung 12 erfolgen kann ist, die Wertdokumentbearbeitungsvorrichtung 10 sehr gut gegen Angriffe aus dem Betreibernetzwerk 14 geschützt. Sicherheitsupdates von Teilen der Software der Wertdokumentbearbeitungsvorrichtung 10 sind im allgemeinen nur notwendig, wenn in der Software Sicherheitslücken erkannt werden, die Angriffe auf die Daten der Wertdokumentbearbeitungsvorrichtung oder deren Funktion erlauben. Durch die Abschirmung der Wertdokumentbearbeitungsvorrichtung 10 sind solche Software-Aktualisierungen nicht oder nur sehr selten notwendig. Dementsprechend kann der hierzu notwendige Aufwand entfallen und die mit Aktualisierung verbundenen möglichen Risiken für die fehlerfreie Funktion der Wertdokumentbearbeitungsvorrichtung können drastisch reduziert werden.

Die Verbindungsvorrichtung 12 kann weiter eine Schnittstelle für einen portablen Datenträger, beispielsweise eine Festplatte oder einen Flash-Speicher, aufweisen. Bei einer Ausführungsform kann die Software der Verbindungsvorrichtung 12 Instruktionen aufweisen, bei deren Ausführung ein Zugriff auf einen mit der Schnittstelle verbundenen mobilen Datenspeicher möglich ist und Aktualisierungen eingelesen und durchgeführt werden können. Bei anderen Ausführungsformen kann die Aktualisierung auch allein durch Software auf dem mobilen Datenträger durchgeführt werden.

Ein anderes Verfahren zur Aktualisierung der Software der Verbindungsvorrichtung 12 sieht vor, dass der Speicher 96 der Verbindungsvorrichtung 12, im Beispiel ein Flash-Speicher in Form einer Karte, durch einen anderen Speicher ersetzt wird.

Sollten auf der Seite des Netzwerks 14 Änderungen vorgenommen werden, die eine Änderung der Hardware der Verbindungsvorrichtung 12, insbesondere der Netzwerkschnittstelle 84 erforderlich machen, braucht die Verbindungsvorrichtung 12 nur durch eine modifizierte Verbindungsvorrichtung ersetzt zu werden, die ein entsprechend modifizierte Netzwerkschnittstelle aufweist. Die Wertdokumentbearbeitungsvorrichtung 10 kann dabei unverändert bleiben.

In anderen Ausführungsbeispielen kann auch eine von der Steuereinrichtung getrennte Auswerteeinrichtung vorgesehen sein, die über Schnittstellen mit den Sensoren der Sensoreinrichtung 48 einerseits und der Steuereinrichtung 58 andererseits verbunden ist. Die Auswerteeinrichtung 56 ist dann zur Auswertung der Sensorsignale ausgebildet und liefert das jeweilige Ergebnis an die Steuereinrichtung 58, die die Transporteinrichtung 28 ansteuert. Die im Folgenden geschilderten Auswertevorgänge können dann allein von der Auswerteeinrichtung durchgeführt werden.

In anderen Ausführungsbeispielen können der Speicher 68 und die Speichereinrichtung 70 durch einen gemeinsamen Speicher gebildet werden.

In anderen Ausführungsbeispielen kann bei der Verbindungsvorrichtung wenigstens eine der Netzwerkschnittstellen 86 und 88 zum physischen Herstellen der Datenverbindung ein mit der Verbindungsvorrichtung festverbundenes, beispielsweise mit einem Ende eingelötetes Netzwerkkabel aufweisen, das direkt mit der Wertdokumentbearbeitungsvorrichtung 10 verbindbar ist: Der entsprechende Anschluss kann dann entfallen. Auch so ist ein einfacher Austausch von Netzwerkkabeln wesentlich erschwert.

In anderen Ausführungsbeispielen kann die Verbindungsvorrichtung 12 auch ein TPM 100 (Trusted Platform Module) umfassen. Das TPM 100 ist mit dem Prozessor 92 verbunden und wird von diesem in Verbindung mit Authentisierung, Signierung und der Verwaltung von Schlüsseln verwendet. Dazu umfasst der Programmcode der Verbindungsvorrichtung entsprechende Instruktionen. Konfigurationsdaten, die Authentisierung und/oder Autorisierung und/oder Signierung und/oder Details der Produktionsvorrichtung betreffen, können in dem Speicher oder dem TPM gespeichert sein, und von dem TPM verwendet werden. Die Verbindungsvorrichtung ist ansonsten wie die zuvor beschriebene Verbindungsvorrichtung ausgebildet.

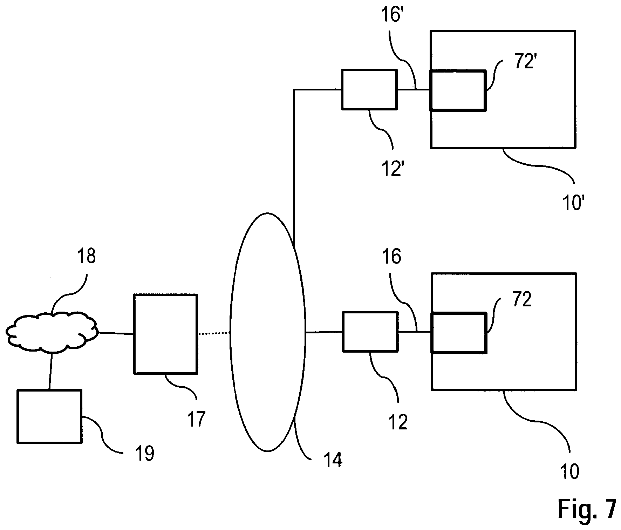

Ein Ausführungsbeispiel in Fig. 7 unterscheidet sich von dem Ausführungsbeispiel in Fig. 1 dadurch, dass eine zweite Wertdokumentbearbeitungsvorrichtung 10' mit dem Netzwerk 14 verbunden ist. Für jede der Wertdokumentbearbeitungsvorrichtungen 10 und 10', in diesem Ausführungsbeispiel in dem Sinne unabhängig voneinander arbeiten, dass die Ergebnisse der Bearbeitung von Wertdokumenten durch die ein Vorrichtung von der anderen Vorrichtung verwendet wird, um die bearbeiteten Wertdokumente oder einen Teil der bearbeiteten Wertdokumente zu bearbeiten, ist eine Verbindungsvorrichtung 12 bzw. 12' vorgesehen, mittels der die Wertdokumentbearbeitungsvorrichtungen mit dem Netzwerk 14 verbunden sind. Im Beispiel ist die Netzwerkschnittstelle 72' der Wertdokumentbearbeitungsvorrichtung10' über eine Signalverbindung 16' mit der Netzwerkschnittstelle 86 der Verbindungsvorrichtung 12' verbunden, deren ersten Netzwerkschnittstelle wiederum mit dem Netzwerk 14 verbunden ist. Die Verbindungsvorrichtungen 12,12' sind dabei gleich ausgebildet, wobei die Konfigurationsdaten entsprechend den Wertdokumentbearbeitungsvorrichtungen 10 und 10' modifiziert sind.

Die Wertdokumentbearbeitungsvorrichtungen 10 und 10' sind dabei gleich entsprechend Fig. 2 aufgebaut, in anderen Ausführungsbeispielen braucht dies jedoch nicht der Fall zu sein.

## Patentansprüche

1. System mit einer datenverarbeitenden und/oder datenerzeugenden Produktionsvorrichtung, die eine Netzwerkschnittstelle aufweist, und einer mit dieser verbundenen Vorrichtung zur Verbindung der datenverarbeitenden und/oder daten-erzeugenden Produktionsvorrichtung mit einem Netzwerk, vorzugsweise einer Datenverarbeitungseinrichtung, beispielsweise einem Server über das Netzwerk, mit
- einem Speicher,
- wenigstens einem Prozessor, der auf den Speicher lesend und schreiben zugreifen kann,
- einer mit dem Netzwerk zu verbindenden ersten Netzwerkschnittstelle
- einer mit der Produktionsvorrichtung zu verbindenden zweiten Netzwerkschnittstelle
- in dem Speicher gespeichertem Programmcode eines Computerprogramms zur Ausführung durch den wenigstens einen Prozessor,
wobei der Programmcode Programmcode umfasst, bei dessen Ausführung an der zweiten Netzwerkschnittstelle über ein zweites Protokoll empfangene Datenpakete an die erste Netzwerkschnittstelle weitergeleitet und dort über ein erstes Protokoll in das Netzwerk, insbesondere an die Datenverarbeitungsvorrichtung, beispielsweise den Server, gesendet werden, und/oder
bei dessen Ausführung an der ersten Netzwerkschnittstelle über ein erstes Protokoll empfangene Datenpakete an die zweite Netzwerkschnittstelle weitergeleitet und dort über ein zweites Protokoll an die Produktionsvorrichtung gesendet werden,
wobei der Programmcode weiter Programmcode umfasst, bei dessen Ausführung der wenigstens eine Prozessor einen Paketfilter auf die Datenpakete auf dem Weg zwischen den Netzwerkschnittstellen anwendet, wobei der Paketfilter bei Ausführung durch den Prozessor die Header von ankommenden, zu filternden Paketen prüft, wobei je nach Ergebnis der Prüfung der jeweiligen Header die Pakete verworfen oder weitergeleitet werden,
wobei das System **dadurch gekennzeichnet ist, dass** die Produktionsvorrichtung wenigstens ein Gehäuse umfasst, und die Signalverbindung zwischen der Vorrichtung und der Produktionsvorrichtung vollständig innerhalb des Gehäuses verläuft, wobei die Vorrichtung vorzugsweise in dem Gehäuse angeordnet ist.

2. System nach Anspruch 1, bei dem das erste und das zweite Protokoll unterschiedlich sind.

3. System nach einem der vorhergehenden Ansprüche, bei der das erste Protokoll ein Protokoll mit Verschlüsselung und das zweite Protokoll vorzugsweise eines ohne Verschlüsselung ist.

4. System nach einem der vorhergehenden Ansprüche, bei der der Programmcode Programmcode umfasst, bei dessen Ausführung der Aufbau einer Datenverbindung über die zweite Netzwerkschnittstelle, d. h. zwischen der Produktionsvorrichtung und der Vorrichtung, überwacht wird, und bei Erkennen eines solchen Aufbaus eine Datenverbindung über die erste Netzwerkschnittstelle, d.h. zwischen der Vorrichtung und dem Netzwerk und/oder einer mit dem Netzwerk verbundenen Datenverarbeitungseinrichtung, beispielsweise einem Server in dem Netzwerk, aufgebaut wird.

5. System nach Anspruch 4, bei der der Programmcode Programmcode umfasst, bei dessen Ausführung die Übertragung von Daten, die in einer Datei von der Produktionsvorrichtung zu der Vorrichtung übertragen werden, in das Netzwerk, beispielsweise zu der Datenverarbeitungseinrichtung, auch dann beginnen kann, wenn die Datei noch nicht vollständig zu der Vorrichtung übertragen wurde.

6. System nach einem der vorhergehenden Ansprüche, die eine dritte Netzwerkschnittstelle zur Verbindung mit einer weiteren datenverarbeitenden und/oder -erzeugenden Produktionsvorrichtung aufweist, die über eine Signalverbindung mit dem wenigstens einen Prozessor verbunden ist, und bei der der Programmcode Programmcode umfasst, bei dessen Ausführung, an der dritten Netzwerkschnittstelle über ein drittes Protokoll empfangene Datenpakete an die erste Netzwerkschnittstelle weitergeleitet und dort über ein erstes Protokoll in das Netzwerk, insbesondere die Datenverarbeitungseinrichtung, beispielsweise den Server, gesendet werden, und/oder
bei dessen Ausführung an der ersten Netzwerkschnittstelle über ein erstes Protokoll empfangene Datenpakete an die dritte Netzwerkschnittstelle weitergeleitet und dort über das dritte Protokoll an die weitere Produktionsvorrichtung gesendet werden und/oder bei deren Ausführung Daten zwischen der zweiten und der dritten Netzwerkschnittstelle transportiert werden.

7. System nach Anspruch 6, bei der der Programmcode Programmcode umfasst bei dessen Ausführung über die zweite Netzwerkschnittstelle empfangene Daten über die dritte Netzwerkschnittstelle versendet werden und/oder bei der der Programmcode Programmcode umfasst, bei dessen Ausführung über die dritte Netzwerkschnittstelle empfangene Daten über die zweite Netzwerkschnittstelle versendet werden.

8. System nach einem der vorhergehenden Ansprüche, die weiter ein TPM aufweist, wobei Daten, die Authentisierung und/oder Autorisierung und/oder Signierung und/oder Details der Produktionsvorrichtung betreffen, in dem Speicher oder dem TPM Modul gespeichert sind.

9. System nach einem der vorhergehenden Ansprüche, bei dem Daten, die Authentisierung und/oder Autorisierung und/oder Signierung und/oder Details des Netzwerks betreffen, in dem Speicher, gespeichert sind.

10. System nach einem der vorhergehenden Ansprüche, die weiter eine Wartungs-Netzwerkschnittstelle aufweist und bei der der Programmcode Programmcode umfasst, bei dessen Ausführung durch den Prozessor Konfigurationsdaten der Vorrichtung geändert werden können.

11. System nach einem der vorhergehenden Ansprüche, bei der der Programmcode Programmcode umfasst, bei dessen Ausführung der Prozessor Daten, die Authentisierung und/oder Autorisierung und/oder Signierung und/oder zur Herstellung einer Datenverbindung zu dem Netzwerk notwendige Details des Netzwerks und/oder zum Filtern von Daten, die in das Netzwerk oder aus diesem übertragen werden, verwendet werden, nur aus dem Speicher der Vorrichtung liest und/oder aus dem Netzwerk empfängt.

12. System nach einem der vorangehenden Ansprüche, das wenigstens eine weitere datenverarbeitenden und/oder datenerzeugenden Produktionsvorrichtung, die eine Netzwerkschnittstelle aufweist, und eine weitere Vorrichtung aufweist, wobei die weitere Produktionsvorrichtung nur mittels der weiteren Vorrichtung mit dem Netzwerk verbunden ist, und vorzugsweise die Netzwerkschnittstelle der weiteren Produktionseinrichtung nur mit der zweiten Netzwerkschnittstelle der weiteren Vorrichtung verbunden ist.

13. Verfahren zur Verbindung einer Produktionsvorrichtung mit einer Netzwerkschnittstelle mit einem Netzwerk, bei dem ein System nach einem der Ansprüche 1 bis 12 verwendet wird und die Netzwerkschnittstelle der Produktionsvorrichtung mit der zweiten Netzwerkschnittstelle der Verbindungsvorrichtung verbunden wird.

14. Verfahren zur Aktualisierung eines Systems nach einem der Ansprüche 1 bis 12 bei dem, vorzugsweise auf Veränderungen in dem Netzwerk hin, nur Konfigurationsdaten und/oder Programmcode der Verbindungsvorrichtung geändert werden, oder bei dem, vorzugsweise in Reaktion auf eine neu erkannte Angriffsmöglichkeit auf das System oder dessen Verbindungsvorrichtung, nur der Programmcode und/ oder die Konfigurationsdaten der Verbindungsvorrichtung geändert werden oder nur die Verbindungsvorrichtung ausgetauscht wird.

## Claims

1. A system with a data-processing and/or data-generating production device, which comprises a network interface, and with a device connected thereto for connecting the data-processing and/or data-generating production device to a network, preferably a data-processing facility such as a server across the network, with
- a memory,
- at least one processor, which can access the memory in a reading and writing capacity,
- a first network interface to be connected to the network,
- a second network interface to be connected to the production device,
- a program code of a computer program stored in the memory for execution by the at least one processor,
wherein the program code includes program code, during the execution of which data packets received at the second network interface via a second protocol are forwarded to the first network interface and sent there via a first protocol into the network, in particular to the data processing facility such as the server, and/or
during the execution of which data packets received at the first network interface via a first protocol are forwarded to the second network interface and sent there via a second protocol to the production device,
wherein the program code further includes program code, during the execution of which the at least one processor applies a packet filter to the data packets on the way between the network interfaces, wherein the packet filter during execution by the processor checks the headers of arriving packets to be filtered, wherein, depending on the result of the check of the respective headers, the packets are discarded or forwarded,
wherein the system is **characterised in that**
the production device includes at least one housing, and the signal link between the device and the production device completely extends within the housing, wherein the device is preferably arranged in the housing.

2. The system according to claim 1, in which the first and the second protocol differ from one another.

3. The system according to one of the preceding claims, in which the first protocol is a protocol with encryption and the second protocol is preferably one without encryption.

4. The system according to one of the preceding claims, in which the program code includes program code, during the execution of which the build-up of a data link via the second network interface, i.e. between the production device and the device, is monitored, and as such a build-up is detected, a data link is established via the first network interface, i.e. between the device and the network and/or a data processing facility connected to the network such as a server in the network.

5. The system according to claim 4, in which the program code includes program code, during the execution of which the transfer of data transferred in a file from the production device to the device, for example to the data processing facility, into the network can begin even if the file has not yet been completely transferred to the device.

6. The system according to one of the preceding claims, which comprises a third network interface for connection to a further data-processing and/or data-generating production device, which is connected via a signal link to the at least one processor, and in which the program code includes program code, during the execution of which data packets received at the third network interface via a third protocol are forwarded to the first network interface and sent there via a first protocol into the network, in particular to the data-processing facility, for example the server, and/or
during the execution of which data packets received at the first network interface via a first protocol are forwarded to the third network interface and are sent der via the third protocol to the further production device, and/or
during the execution of which data is transported between the second and the third network interface.

7. The system according to claim 6, in which the program code includes program code, during the execution of which data received via the second network interface is sent out via the third network interface and/or in which the program code includes program code, during the execution of which data received via the third network interface is sent out via the second network interface.

8. The system according to one of the preceding claims, which further comprises a TPM, wherein data relating to authentication and/or authorisation and/or signing and/or details of the production device, is stored in the memory or the TPM module.

9. The system according to one of the preceding claims, in which data relating to authentication and/or authorisation and/or signing and/or details of the network, is stored in the memory.

10. The system according to one of the preceding claims, which further comprises a maintenance network interface and in which the program code includes program code, during the execution of which by the processor configuration data of the device can be changed.

11. The system according to one of the preceding claims, in which the program code includes program code, during the execution of which the processor only reads data from the memory of the device and/or only receives data from the network, such data being used for authentication and/or authorisation and/or signing and/or for details necessary for establishing a data link to the network and/or for filtering data being transferred into or out of the network.

12. The system according to one of the preceding claims, which comprises at least one further data-processing and/or data-generating production device comprising a network interface, and a further device, wherein the further production device is connected to the network only by means of the further device, and wherein preferably the network interface of the further production device is connected only to the second network interface of the further device.

13. A method for connecting a production device with a network interface to a network, in which a system according to one of claims 1 to 12 is used and the network interface of the production device is connected to the second network interface of the connection device.

14. The method for updating a system according to one of claims 1 to 12, in which, preferably as a result of changes in the network, only configuration data and/or program code is changed, or in which, preferably in reaction to a newly detected possible attack on the system or the connection device thereof, only the program code and/or the configuration data of the connection device is changed or only the connection device is replaced.

## Revendications

1. Système comportant un dispositif de production traitant des données et/ou générant des données, qui présente une interface de réseau, et un dispositif qui lui est connecté pour la connexion du dispositif de production traitant des données et/ou générant des données à un réseau, de préférence un dispositif de traitement de données, par exemple un serveur par l'intermédiaire du réseau, comportant
- une mémoire,
- au moins un processeur qui peut intervenir sur la mémoire en lecture et en écriture,
- une première interface de réseau à connecter au réseau,
- une deuxième interface de réseau à connecter au dispositif de production,
- un code de programme enregistré dans la mémoire d'un programme informatique pour exécution par l'au moins un processeur,
le code de programme comprenant un code de programme lors de l'exécution duquel des paquets de données reçus au niveau de la deuxième interface de réseau par un deuxième protocole peuvent être retransmis à la première interface de réseau et y être envoyés par un premier protocole dans le réseau, en particulier au dispositif de traitement de données, par exemple le serveur, et/ou
lors de l'exécution duquel les paquets de données reçus par un premier protocole peuvent être retransmis à la deuxième interface de réseau et y être envoyés par un deuxième protocole au dispositif de production,
le code de programme comprend en outre un code de programme lors de l'exécution duquel l'au moins un processeur applique un filtre de paquets au paquet de données sur la voie entre les interfaces de réseau, le filtre de paquets, lors de l'exécution par le processeur, contrôlant les en-têtes de paquets arrivant à filtrer, les paquets étant rejetés ou retransmis en fonction du résultat du contrôle des en-têtes respectifs,
le système étant **caractérisé en ce que**
le dispositif de production comprend au moins un boîtier, et que la liaison de signalisation entre le dispositif et le dispositif de production se déroule entièrement à l'intérieur du boîtier, le dispositif étant de préférence disposé dans le boîtier.

2. Système selon la revendication 1, dans lequel le premier et le deuxième protocole sont différents.

3. Système selon une des revendications précédentes, dans lequel le premier protocole est un protocole avec codage et le deuxième protocole est de préférence un protocole sans codage.

4. Système selon une des revendications précédentes, dans lequel le code de programme comprend un code de programme lors de l'exécution duquel la structure d'une connexion de données par la deuxième interface de réseau, c'est-à-dire entre le dispositif de production et le dispositif, est surveillée et, en cas de détection d'une telle structure, une connexion de données par la première interface de réseau, c'est-à-dire entre le dispositif et le réseau et/ou un dispositif de traitement de données connecté au réseau, par exemple un serveur dans le réseau, est établie.

5. Système selon la revendication 4, dans lequel le code de programme comprend un code de programme lors de l'exécution duquel le transfert de données qui sont transférées dans un fichier du dispositif de production au dispositif dans le réseau, par exemple vers le dispositif de traitement des données, peut commencer même si le fichier n'a pas encore été complètement transféré au dispositif.

6. Système selon une des revendications précédentes, qui présente une troisième interface de réseau pour connexion à un autre dispositif de production traitant des données et/ou générant des données qui est connectée par une connexion de signalisation à l'au moins un processeur, et dans lequel le code de programme comprend un code de programme lors de l'exécution duquel les paquets de données reçus au niveau de la troisième interface de réseau par un troisième protocole sont retransmises à la première interface de réseau et y sont envoyés par un premier protocole dans le réseau, en particulier le dispositif de traitement de données, par exemple serveur, et/ou
lors de l'exécution duquel les paquets de données reçus au niveau de la première interface de réseau par un premier protocole sont transférés à la troisième interface de réseau et y sont envoyés par le troisième protocole à l'autre dispositif de production et/ou lors de l'exécution duquel des données sont transportées entre la deuxième et la troisième interface de réseau.

7. Système selon la revendication 6, dans lequel le code de programme comprend un code de programme lors de l'exécution duquel des données reçues par la deuxième interface de réseau sont envoyées par la troisième interface de réseau et/ou dans lequel le code de programme comprend un code de programme lors de l'exécution duquel des données reçues par la troisième interface de réseau sont envoyées par la deuxième interface de réseau.

8. Système selon une des revendications précédentes, qui présente en outre un TPM, les données qui concernent l'authentification et/ou l'autorisation et/ou la signature et/ou des détails du dispositif de production étant enregistrées dans la mémoire ou dans le module TPM.

9. Système selon une des revendications précédentes, dans lequel les données qui concernent l'authentification et/ou l'autorisation et/ou la signature et/ou des détails du dispositif de production sont enregistrées dans la mémoire.

10. Système selon une des revendications précédentes, qui présente en outre une interface de réseau de maintenance et dans lequel le code de programme comprend un code de programme lors de l'exécution duquel des données de configuration du dispositif peuvent être modifiées par le processeur.

11. Système selon une des revendications précédentes, dans lequel le code de programme comprend un code de programme lors de l'exécution duquel le processeur lit des détails nécessaires à l'authentification et/ou l'autorisation et/ou la signature et/ou sont utilisées pour l'établissement d'une connexion de données avec le réseau et/ou pour le filtrage de données qui sont transférées dans le réseau ou depuis celui-ci seulement dans la mémoire du dispositif et/ou les reçoit de la part du réseau.

12. Système selon une des revendications précédentes, qui présente au moins un autre dispositif de production traitant des données et/ou générant des données, qui présente une interface de réseau et un autre dispositif, l'autre dispositif de production étant connecté seulement au moyen de l'autre dispositif au réseau, et l'interface de réseau de l'autre dispositif de réseau étant connectée seulement à la deuxième interface de réseau de l'autre dispositif.

13. Procédé de connexion d'un dispositif de production comportant une interface de réseau avec un réseau, dans lequel un système selon une des revendications 1 à 12 est utilisé et l'interface de réseau du dispositif de production est connectée à la deuxième interface de réseau du dispositif de connexion.

14. Procédé d'actualisation d'un système selon une des revendications 1 à 12, dans lequel, de préférence en vue de modifications dans le réseau, seulement des données de configuration et/ou des codes de programmes du dispositif de connexion sont modifiés ou dans lequel, de préférence en réaction à une possibilité d'attaque nouvellement détectée sur le système ou son dispositif de connexion, seulement le code de programme et/ou les données de configuration du dispositif de connexion sont modifiés ou seules le dispositif de connexion est changé.
